# EUROPÄISCHE PATENTSCHRIFT

(11) **EP 2 321 543 B1**
(45) Veröffentlichungstag und Bekanntmachung des Hinweises auf die Patenterteilung: **31.10.2012**
(21) Anmeldenummer: 09780351.4
(22) Anmeldetag: 09.07.2009
(51) Int. Cl.: F16C 11/02, B25D 11/06

(54) **KOPPELBOLZEN, WERKZEUGMASCHINE UND HERSTELLVERFAHREN FÜR EINEN KOPPELBOLZEN**
COUPLING BOLT, TOOL MACHINE AND METHOD FOR PRODUCING A COUPLING BOLT
BOULON DE COUPLAGE, MACHINE-OUTIL ET PROCÉDÉ DE FABRICATION D'UN BOULON DE COUPLAGE

(30) Priorität: 09.09.2008 DE 102008041890
(43) Veröffentlichungstag der Anmeldung: 18.05.2011
(73) Patentinhaber: Robert Bosch GmbH, 70442 Stuttgart (DE)
(72) Erfinder: ENGEL, Richard, 01855 Sebnitz (DE); WEISS, Michael, 70563 Stuttgart (DE)
(86) Internationale Anmeldenummer: PCT/EP2009/058716
(87) Internationale Veröffentlichungsnummer: WO 2010/028874

(56) Entgegenhaltungen:
- EP-A1- 1 413 401
- DE-A1- 3 527 417
- GB-A- 891 129

## Beschreibung

### Stand der Technik

Die Erfindung betrifft einen Koppelbolzen einer beweglichen Gelenkvorrichtung, insbesondere eines Antriebsgelenks einer Kolbeneinheit, eine Werkzeugmaschine und ein Herstellverfahren für einen Koppelbolzen nach der Gattung der unabhängigen Ansprüche.

Es sind bereits Koppelbolzen in beweglichen Gelenkvorrichtungen, insbesondere in Antriebsgelenken von Kolbeneinheiten bekannt, welche eine Längserstreckung und einer im Wesentlichen quer zu dieser Längserstreckung verlaufenden Aufnahmebohrung zur Aufnahme eines Koppelgliedes der Gelenkvorrichtung bekannt. Die bekannten Gelenkvorrichtungen sind dabei vorzugsweise als Scharniergelenke ausgeführt. Die Gelenkvorrichtung verbindet dabei einen eingangsseitigen Gelenkarm mit einem ausgangsseitigen Gelenkarm. In bevorzugten Gelenkvorrichtungen ist der eingangsseitige Gelenkarm Koppelglied ausgeführt. Das Koppelglied ist vorzugsweise als ein angetriebenes, insbesondere schwenkbar angetriebenes Koppelglied ausgebildet. Der ausgangsseitige Gelenkarm ist in bevorzugten Ausführungen als eine Kolbeneinheit ausgeführt, welche über die Gelenkvorrichtung zu einer Im Wesentlichen axialen Oszillationsbewegung antreibbar ist. Eine derartige Gelenkvorrichtung kann auch als Antriebsgelenk einer Kolbeneinheit verstanden werden.

In einer bevorzugten, vielfach bekannten Ausführung ist eine Gelenkvorrichtung, insbesondere das Antriebsgelenk einer Kolbeneinheit, in Werkzeugmaschinen mit einer Antriebsvorrichtung, welche mindestens eine Axialantriebsvorrichtung zum Antrieb eines Werkzeugs umfasst, vorgesehen. Dabei weist die Axialantriebsvorrichtung eine, das Koppelglied umfassende Bewegungsübertragungseinheit auf. Ferner ist eine, einen Aufnahmebereich und einen Kolbenbereich mit einer Längsachse aufweisende Kolbeneinheit vorgesehen. Die bekannten Kolbeneinheiten, insbesondere die Kolbenbereiche der bekannten Kolbeneinheiten weisen dabei eine im Wesentlichen zylindrische Gestalt auf, welche sich zylindersymmetrisch um die Längsachse erstreckt. Das Koppelglied der Bewegungsübertragungseinheit ist im Aufnahmebereich der Kolbeneinheit mit der Kolbeneinheit über den Koppelbolzen verbunden. Der Koppelbolzen weist dabei vorzugsweise eine zylindrische Grundgestalt mit einer Bolzenlängsachse auf. Senkrecht zur Bolzenlängsachse ist dabei die Aufnahmebohrung vorgesehen, in welche das Koppelglied eingreifen kann. Diese Koppelbolzen werden im allgemeinen aus zylindrischen Lagerstiften mit oder ohne einer zusätzliche Drehbearbeitung einer Zylindermantelfläche hergestellt. Die Aufnahmebohrung wird vorzugsweise mittels einer nachträglichen Bohr- oder Fräsbearbeitung in den Lagerstift eingebracht.

Die Kolbeneinheit wird in der Regel in Werkzeugmaschinen mittels der Axialantriebsvorrichtung zu einer im Wesentlichen axialen Oszillationsbewegung angeregt. In den Umkehrpunkten dieser Oszillationsbewegung treten aufgrund der trägen Masse der bewegten Elemente sogenannte Trägheits- oder Massenkräfte auf, welche auf die Werkzeugmaschine in Form von Vibrationen zurückwirken können. Die Stärke der Massenkräfte hängt neben der Höhe der Geschwindigkeitsänderung in den Umkehrpunkten im Wesentlichen von der trägen Masse der bewegten Elemente selbst ab.

Es sind daher bereits Koppelbolzen bekannt, die in mindestens einer Stirnseite eine Aussparung aufweisen. Diese Aussparungen werden in einer nachträglichen Drehbearbeitung hergestellt, wodurch die Aussparung einen konischen Boden aufweist. Eine Konusspitze des konische Bodens weist dabei von der Stirnseite weg.

### Offenbarung der Erfindung

### Vorteile der Erfindung

Der erfindungsgemäße Koppelbolzen mit den Merkmalen des Hauptanspruchs hat den Vorteil, dass ein minimales Gewicht bei gleichzeitig hoher Belastbarkeit erreicht wird. Dazu weist der Koppelbolzen eine Längserstreckung und eine im Wesentlichen quer, insbesondere senkrecht zu dieser Längserstreckung verlaufende Aufnahmebohrung zur Aufnahme eines Koppelgliedes der Gelenkvorrichtung auf. Insbesondere Koppelbolzen für Gelenkvorrichtungen in Werkzeugmaschinen, insbesondere in handgeführten Werkzeugmaschinen liegt die Längserstreckung in einem Bereich zwischen 5 und 40 mm, vorzugsweise zwischen 10 und 30 mm. Vorzugsweise ist der Koppelbolzen insbesondere als im Wesentlichen zylindrischer oder konischer Lagerstift ausgeführt. Der bevorzugte Koppelbolzen weist dabei insbesondere eine, um eine in Längserstreckung vorgesehene Bolzenlängsachse im Wesentlichen axialsymmetrische Außenkontur auf. Ein besonders niedriges Gewicht wird dadurch erreicht, dass der Koppelbolzen mindestens in einer Stirnseite eine, sich entlang der Längserstreckung ausdehnende Aussparung aufweist, welche durch einen - von der Stirnseite aus gesehen - konkaven Boden begrenzt ist.

Durch die in den Unteransprüchen aufgeführten Maßnahmen ergeben sich vorteilhafte Weiterbildungen und Verbesserungen der im Hauptanspruch angegebenen Merkmale.

Eine besonders vorteilhafte Ausbildung des Koppelbolzens wird erreicht, wenn der konkave Boden einen sattelförmigen und einen, zu einer Bohrungsachse der Aufnahmebohrung gekrümmten Oberflächenverlauf hat. Unter "sattelförmig" wird dabei insbesondere ein Oberflächenverlauf des konkaven Bodens verstanden, welcher entlang einer radialen Durchmessermesserrichtung eine zentrale Längshöhenlinie aufweist, die im Wesentlichen parallel zur Stirnfläche verläuft und höher ist als die übrigen Längshöhenlinien. Um die Bolzenlängsachse konzentrische Umfangshöhenlinien weisen bei einem Umlauf einen sinusförmigen Verlauf auf. Vorzugsweise weisen die Umfangshöhenlinien Schnittpunkte mit der zentralen Längshöhenlinie auf. Unter "zur Bohrungsachse gekrümmt wird dabei insbesondere verstanden, dass der Oberflächenverlauf einen positiven Krümmungsradius um die Bohrungsachse der Aufnahmebohrung aufweist. Der konkave Boden kann dabei insbesondere im Wesentlichen senkrecht zu der Bolzenlängsachse orientiert sein.

Vorteilhaft kann die Belastbarkeit des erfindungsgemäßen Koppelbolzens dadurch beeinflusst werden, dass der konkave Boden einen im Wesentlichen konstanten, insbesondere in einem inneren, sich um die Bolzenlängsachse erstreckenden Innenbereich im Wesentlichen konstanten Querschnittsverlauf aufweist. Unter dem "Querschnittsverlauf' wird dabei insbesondere ein Querschnitt entlang einer Schnittebene verstanden, in welcher die Bolzenlängsachse verläuft.

Eine besonders bevorzugte Ausführung eines erfindungsgemäßen Koppelbolzens weist eine weitgehend einheitlichen Querschnittsverlauf der Wandstärke über den gesamten Koppelbolzen auf. Insbesondere Koppelbolzen für Gelenkvorrichtungen in Werkzeugmaschinen, insbesondere in handgeführten Werkzeugmaschinen, beispielsweise Koppelbolzen in Antriebsgelenken einer Kolbeneinheit von Werkzeugmaschinen, weisen typischerweise Wandstärken zwischen 0,5 und 3,0 mm, insbesondere zwischen 0,7 und 1,7 mm auf.

Eine weitere vorteilhafte Ausführung des erfindungsgemäßen Koppelbolzens kann erreicht werden, wenn die Aussparung eine sie begrenzenden Mantelfläche, insbesondere eine sie begrenzende zylindrische Mantelfläche aufweist. Ferner eine Kantenlinie zwischen der Mantelfläche und dem konkaven Boden einen Abstand A1 von der Stirnfläche aufweist, der größer ist ein Abstand A2 eines inneren Bereichs des konkaven Bodens. Bevorzugterweise stellt der Abstand A1 insbesondere der größte Abstand Amax des konkaven Bodens von der Stirnfläche dar.

Die Belastbarkeit des erfindungsgemäßen Koppelbolzens kann dadurch gesteigert werden, dass ein Übergangsbereich der Mantelfläche der Aussparung zum konkaven Boden eine Verrundung aufweist. Vorteilhafterweise weist die Verrundung insbesondere eine Mittelpunktslinie auf, welche vorzugsweise in der Aussparung verläuft. Insbesondere ist die Verrundung in Richtung auf die Bolzenlängsachse hin gekrümmt.

Eine besonders leichte Ausführung eines erfindungsgemäßen Koppelbolzens wird erreicht, wenn jede Stirnfläche eine Aussparung aufweist. In einer Weiterentwicklung sind alle Aussparungen vorteilhafterweise im Wesentlichen gleich ausgebildet.

Eine besonders einfache Herstellung eines erfindungsgemäßen Koppelbolzens wird erreicht, wenn der Koppelbolzen aus einem Metall-Spritzguss-Material, insbesondere aus einem Metall-Pulverspritzguss-Material hergestellt wird.

Eine weitere vorteilhafte Reduktion der Masse des erfindungsgemäßen Koppelbolzens wird dadurch erreicht, dass der Koppelbolzen aus einem metallischen Material, insbesondere einem Aluminium- oder Magnesium-basierten Leichtmetall oder einer entsprechend Leichtmetalllegierung besteht. Unter "entsprechender Leichtmetalllegierung" wird dabei insbesondere eine Legierung verstanden, deren wesentlicher Bestandteil ein Leichtmetall, insbesondere Aluminium oder Magnesium ist.

In einem weiteren Aspekt der Erfindung wird vorgeschlagen, dass in einer Werkzeugmaschine, insbesondere einer handgeführte Werkzeugmaschine mit einer Antriebsvorrichtung, welche mindestens eine Axialantriebsvorrichtung zum Antrieb eines Werkzeugs umfasst, wobei die Axialantriebvorrichtung eine, ein Koppelglied umfassende Bewegungsübertragungseinheit und eine, einen Aufnahmebereich und einen Kolbenbereich mit einer Längsachse aufweisende Kolbeneinheit aufweist, wobei das Koppelglied der Bewegungsübertragungseinheit im Aufnahmebereich mit der Kolbeneinheit über einen erfindungsgemäßen Koppelbolzen verbunden ist. Dadurch wird eine vorteilhafte Werkzeugmaschine erreicht, welche bei gleicher Leistungsfähigkeit der Axialantriebsvorrichtung zum Antrieb des Werkzeugs im vergleich zum Stand der Technik auf Grund der reduzierten bewegten trägen Masse geringeren Massenkräfte in den Umkehrpunkten der Oszillationsbewegung ausgesetzt ist.

In einer bevorzugten Ausführung einer Werkzeugmaschine mit erfindungsgemäßem Koppelbolzen ist die axiale Antriebsvorrichtung ein Schlagwerk, insbesondere ein Luftpolsterschlagwerk. Die Kolbeneinheit ist dabei als ein Schlagwerkskolben ausgeführt.

Die erfindungsgemäße Werkzeugmaschine kann aber auch beispielsweise als eine Säge ausgeführt sein, in welcher die erfindungsgemäße Kolbeneinheit als axial oszillierende Werkzeugspindel eines Sägeantriebs ausgeführt ist. Darüber hinaus sind andere Ausführungen von Werkzeugmaschinen möglich, bei denen die erfindungsgemäße Kolbeneinheit vorteilhaft eingesetzt werden kann.

Ein weiterer Aspekt der Erfindung betrifft ein Herstellverfahren für einen erfindungsgemäßen Koppelbolzen, bei dem der Koppelbolzen im Wesentlichen in einem spanlosen Fertigungsprozess hergestellt wird.

In einer vorteilhaften Ausführung des Herstellverfahrens ist der spanlose Fertigungsprozess zur Herstellung des erfindungsgemäßen Koppelbolzens ein Guss-, Spritz-, Spritzguss-, Pulverspritzguss- oder Sinterprozess. Insbesondere kann der spanlose Fertigungsprozess eine Metall-Pulverspritzguss-Prozess sein. Dieser ist insbesondere auch unter der Bezeichnung MIM-Prozess bekannt.

In einer kostengünstigen Ausführung des Herstellverfahrens ist der spanlose Fertigungsprozess zur Herstellung des erfindungsgemäßen Koppelbolzens ein Umformprozess. Hier kommen insbesondere Kaltschlag-, Warmschlag- oder Tiefziehprozesse in Betracht.

### Beschreibung der Zeichnungen

Ausführungsbeispiele der Erfindung sind in den Zeichnungen dargestellt und in der folgenden Beschreibung näher erläutert. Es zeigen:
Figur 1 eine schematische, teilgeschnittene Seitenansicht eines Bohrhammers
Figur 2 eine perspektivische Schnittansicht eines Koppelbolzens nach dem Stand der Technik
Figur 3a eine perspektivische Seitenansicht eines Ausführungsbeispiels eines erfindungsgemäßen Koppelbolzens
Figur 3b eine Schnittansicht des Koppelbolzens in der XZ-Ebene nach Figur 3a
Figur 3c eine Schnittansicht des Koppelbolzens in der XY-Ebene nach Figur 3a
Figur 4 Ablaufschema eines erfindungsgemäßen Herstellverfahrens für einen Koppelbolzen nach Figur 3a

### Beschreibung der Ausführungsbeispiele

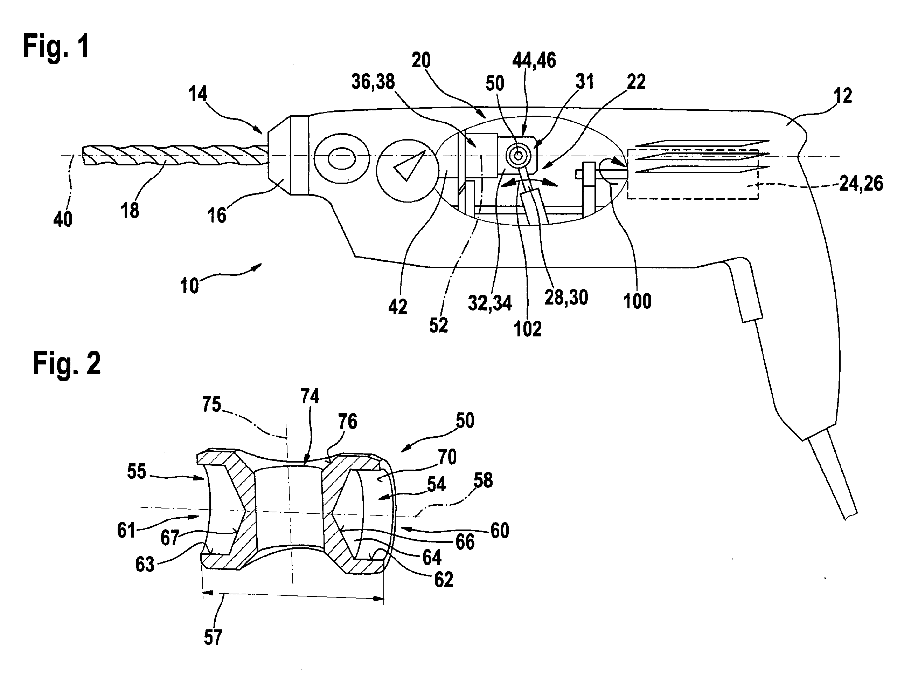

Figur 1 zeigt eine schematische Ansicht eines Bohrhammers 10 als Beispiel einer Werkzeugmaschine 10a, insbesondere einer Handwerkzeugmaschine lOb. Der Bohrhammer 10 weist ein Maschinengehäuse 12 auf. An einer vorderen Stirnseite 14 des Maschinengehäuses 12 ist ein Werkzeughalter 16 vorgesehen. Der Werkzeughalter 16 dient der Aufnahme, insbesondere der wechselbaren Aufnahme eines Werkzeugs 18.

Im Maschinengehäuse 12 ist eine Antriebsvorrichtung 20 angeordnet, welche eine Axialantriebsvorrichtung 22 umfasst. Dabei ist die Antriebsvorrichtung 20 zu einem Antrieb des Werkzeugs 18 mit diesem wirkverbunden. Die Antriebsvorrichtung 20 weist weiters einen Antriebsmotor 24, insbesondere einen Elektromotor 26 auf, welcher in Figur 1 nur angedeutet dargestellt ist. Die Axialantriebsvorrichtung 22 setzt dabei eine Rotationsbewegung 100 des Antriebsmotors 24, 26 in eine Axialbewegung, insbesondere in eine im Wesentlichen axiale Oszillationsbewegung 102 um. Diese axiale Oszillationsbewegung 102 wird über ein Koppelglied 28 einer Bewegungsübertragungseinheit 30 auf eine Kolbeneinheit 32 übertragen. Das Koppelglied 28 bildet dabei einen ersten Gelenkarm einer beispielhaften Gelenkvorrichtung 31.

Im Falle des Bohrhammers 10 ist die Kolbeneinheit 32 als ein Schlagwerkskolben 34 eines Schlagwerks 36, insbesondere eines Luftpolsterschlagwerks 38 ausgeführt. Die Kolbeneinheit 32 ist im vorliegenden Beispiel im Wesentlich zylindrisch um eine Längsachse 52 ausgebildet. Im Bohrhammer 10 ist die Kolbeneinheit 32 entlang einer Werkzeugachse 40 in einem Hammerrohr 42 axial beweglich aufgenommen. Die Längsachse 52 ist dabei im Wesentlichen koaxial mit der Werkzeugachse 40 ausgerichtet. Derartige Schlagwerke 36, 38 sind hinreichend bekannt, so dass auf deren Darstellung bezüglich Aufbau und Funktionsweise an dieser Stelle verzichtet wird. Die Kolbeneinheit 32 bildet in diesem Beispiel einen zweiten Gelenkarm einer beispielhaften Gelenkvorrichtung 31.

Ein aus dem Hammerrohr 42 herausragender Endbereich 44 der Kolbeneinheit 32 ist als ein Aufnahmebereich 46 ausgeführt. Der Aufnahmebereich 46 weist eine Aufnahmebohrung 48 auf. In der Aufnahmebohrung 48 ist ein Koppelbolzen 50 aufgenommen. Der Koppelbolzen 50 ist dabei insbesondere drehbar beweglich in der Aufnahmebohrung gelagert. Das Koppelglied 28 der Bewegungsübertragungseinheit 30 ist in einer hier nicht dargestellten Aufnahmebohrung im Koppelbolzen 50 aufgenommen. Auf diese Weise kann eine Bewegung des Koppelglieds 28, insbesondere eine durch die axiale Oszillationsbewegung 102 verursachte Schwenkbewegung des Koppelglieds 28, welche im Wesentlichen axial entlang der Werkzeugachse 40 verläuft, auf die Kolbeneinheit 32 übertragen werden. Der Koppelbolzen 50 verbindet somit den ersten Gelenkarm mit dem zweiten Gelenkarm der beispielhaften Gelenkvorrichtung 31.

Fig. 2 zeigt einen Koppelbolzen 50 mit beidseits stirnseitigen Aussparungen 54, 55 nach dem Stand der Technik. Der Koppelbolzen 50 weist im vorliegenden Beispiel eine vorwiegend zylindrische Grundgestalt 56 mit einer Längserstreckung 57 auf. Dabei erstreckt sich die zylindrische Grundgestalt 56 über die Längserstreckung 57 entlang einer Bolzenlängsachse 58, welche der Koppelbolzen 50 annährend zylindersymmetrisch umschließt. Die zylindrische Grundgestalt 56 weist zwei Stirnseiten 60, 61 auf, in welchen jeweils eine der Aussparungen 54, 55 vorgesehen ist. Da die Aussparungen 54, 55 gemäß Fig. 2 analog, insbesondere im Wesentlichen gleich ausgeführt sind, wird im Weiteren nur eine der Aussparungen 54 beschrieben. Die Beschreibung ist analog auf die andere Aussparung 55 übertragbar.

Die Aussparung 54 erstreckt sich von einer Stirnseite 60 des Koppelbolzens 50 in dessen Innere. Dabei weist die Aussparung 54 eine zylindrische Mantelfläche 62 auf, welche sich weitgehend symmetrisch um die Bolzenlängsachse 58 erstreckt. Auf einer der Stirnseite 60 abgewandten Seite ist die Aussparung 54 durch einen konisch geformten Boden 64, insbesondere durch eine konische Bodenfläche 66 begrenzt. Die konische Bodenfläche 66 weist insbesondere eine Konusspitze 68 auf, welche im Wesentlichen auf der Bolzenlängsachse 58 angeordnet ist. Darüber hinaus weist die Konusspitze 68 einen von der Stirnseite 60 aus gesehen lotrechten Abstand A1 von der Stirnseite 60, insbesondere von einer stirnseitigen Begrenzungsfläche 70 auf, welcher dem maximalen lotrechten Abstand Amax eines beliebigen Punktes auf der konischen Bodenfläche 66 von der Stirnseite 60 im Wesentlichen entspricht. Die zylindrische Mantelfläche 62 der Aussparung 54 wird vom konischen geformten Boden 66 durch eine im Wesentlichen scharfe Kantenlinie 72 separiert. Insbesondere stoßen die zylindrische Mantelfläche 62 und die konische Bodenfläche 66 an der Kantenlinie 72 aneinander.

Quer zur Längserstreckung 57, insbesondere senkrecht zur Längserstreckung 57 ist im Koppelbolzen 50 eine Aufnahmebohrung 74 vorgesehen. Die Aufnahmebohrung 74 weist eine Bohrungsachse 75 auf und dient der Aufnahme eines Endbereichs des Koppelglieds 28 der Bewegungsübertragungseinheit 30. Im vorliegenden Beispiel ist die Aufnahmebohrung 74 im Wesentlichen zylindrisch ausgeführt. Je nach Ausführung des Koppelglieds 28 kann jedoch auch eine von der Zylinderform abweichende Gestalt der Aufnahmebohrung 74 vorteilhaft sein. An ihren Enden weist die Aufnahmebohrung 74 jeweils eine Anfasung 76 auf. Die Anfasung 76 ist im vorliegenden Beispiel im Wesentlichen konisch ausgeführt.

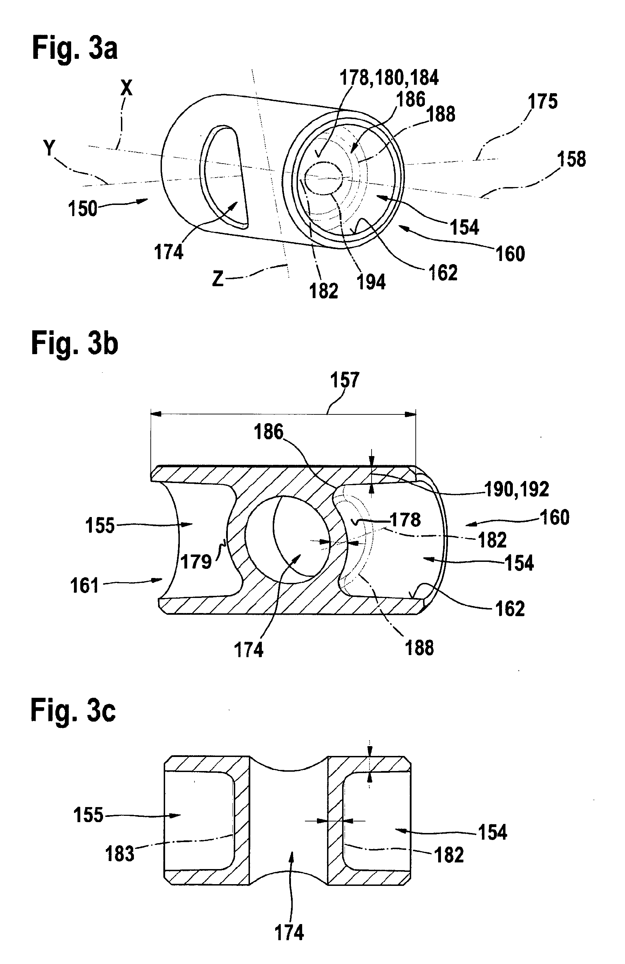

Fig. 3a zeigt eine perspektivische Ansicht eines Ausführungsbeispiels eines erfindungsgemäßen Koppelbolzens 150. Gleiche oder gleichwirkende Merkmale erhalten dabei um 100 erhöhte Bezugszeichen.

Analog zum bekannten Koppelbolzen 50 nach dem Stand der Technik weist der erfindungsgemäße Koppelbolzen 150 im vorliegenden Ausführungsbeispiel nach Fig. 3a eine zylindrische Grundgestalt mit einer Bolzenlängsachse 158 und zwei Stirnseiten 160, 161 auf. In jeder der Stirnseiten 160, 161 ist eine Aussparung 154, 155 vorgesehen. Diese sind im vorliegenden Beispiel symmetrisch ausgebildet, so dass auch hier nur eine der Aussparungen 154, 155 im Detail beschrieben wird. Die Beschreibung der Aussparung 154 ist in analoger weise auf die Aussparung 155 übertragbar. Gleiche Merkmale der Aussparung 155 erhalten dabei um "1" erhöhte Bezugszeichen, welche nicht in allen Fällen im Einzelnen in den Abbildungen dargestellt sind.

Die Aussparung 154 weist eine zylindrische Mantelfläche 162 und einen - von der Stirnseite 160 aus gesehen - im Wesentlichen konkaven Boden 178, insbesondere eine konkave Bodenfläche 180 auf. Der konkave Boden 178 ist dabei in das Innere der Aussparung 154 hinein gekrümmt. Insbesondere weist der konkave Boden 178 eine in einem Innenbereich seiner Oberfläche vorgesehen lotrechten Abstand A1 von der Stirnseite 160 auf, welcher dem minimal vorgesehenen Abstand Amin entspricht. Im vorliegenden Beispiel liegen die Punkte mit minimale Abstand Amin zur Stirnseite 160 im Wesentlichen auf einer geraden Längshöhenlinie 182. Diese Längshöhenlinie 182 schneidet die Bolzenlängsachse 158 und erstreckt sich im Wesentlichen über den gesamten konkaven Boden 178. Um die Bolzenlängsachse 158 im Wesentlichen konzentrisch verlaufende Umfangshöhenlinien 194 verlaufen im Wesentlichen sinusförmig. Diese schneiden die Längshöhenlinie 182 an ihren Maxima. Der konkave Boden 178 erhält auf diese Weise einen im Wesentlichen sattelförmigen Oberflächenverlauf 184. Insbesondere ist sattelförmige Oberflächenverlauf 184 nach Fig. 3a zur Bohrungsachse 175 der Aufnahmebohrung 174 gekrümmt.

Im Übergang zwischen der zylindrischen Mantelfläche 162 und dem konkaven Boden 178 ist weiters eine Verrundung 186 vorgesehen. Diese Verrundung 186 weist im vorliegenden Beispiel einen weitgehend über den Umfang konstanten Verrundungsradius Rv auf. Insbesondere liegt der Mittelpunkt eines jeden Verrundungsradius Rv auf einer Mittelpunktslinie 188, welche im Inneren der Aussparung 160 verläuft. Die Verrundung 186 hat zur Folge, dass keine scharfe Kantenlinie zwischen der zylindrische Mantelfläche 162 und dem konkaven Boden 178 ausgebildet wird.

Fig. 3b zeigt einen Schnitt durch den erfindungsgemäßen Koppelbolzen 150 als Aufsicht auf die X-Z-Ebene nach Fig. 3a. In dieser Ansicht ist der sattelförmige Oberflächenverlauf 184, 185 des konkaven Bodens 178, 179 der Aussparungen 160, 161 deutlich zu erkennen. Der konkave Boden 178 beider Aussparungen 160, 161 fasst die Aufnahmebohrung 174 nahezu zylindrisch ein. Dieser Schnitt zeigt insbesondere auch einen annährend konstanten Verlauf einer Wandstärke 190. Typische Wandstärken 190 liegen dabei im Bereich zwischen 0,5 und 3,0 Millimetern, vorzugsweise zwischen 0,7 und 1,7 Millimetern. Im vorliegenden Beispiel weicht die Wandstärke 190 nur im Bereich der Verrundungen 186, 187 stärker von ihrem ansonsten konstanten Verlauf ab, so dass im Wesentlichen von ein konstanter Querschnittverlauf (192) der Wandstärke (190) erreicht wird.

Fig. 3c zeigt einen Schnitt durch den erfindungsgemäßen Koppelbolzen 150 als Aufsicht auf die X-Y-Ebene nach Fig. 3a. In dieser Darstellung ist insbesondere ein im Wesentlichen gerader, annährend parallel zur Ausnahmebohrung 174 orientierter Verlauf der Höhenlinien 182, 183 der Punkte mit minimalem Abstand A1 zur jeweiligen Stirnseite 160, 161 zu erkennen. Lediglich im Bereich der Verrundungen 186, 187 weichen die Abstände A1 zu noch kleineren Werten hin ab. In der Darstellung nach Fig. 3c erscheinen die Aussparungen als verrundete Zylinder, während aus Fig. 3b der sattelförmige Oberflächenverlauf 184, 185 der erfindungsgemäßen Aussparungen 154, 155 klar zu erkennen ist.

In besonders bevorzugten Ausführungen ist der erfindungsgemäße Koppelbolzen 150 aus einem aus einem Metall-Spritzguss-Material, insbesondere aus einem Metall-Pulverspritzguss-Material gefertigt. In weiteren Weiterentwicklungen ist Koppelbolzen aus einem metallischen Material, insbesondere einem Aluminium - oder Magnesium-basierten Leichtmetall oder einer entsprechenden Leichtmetalllegierung hergestellt.

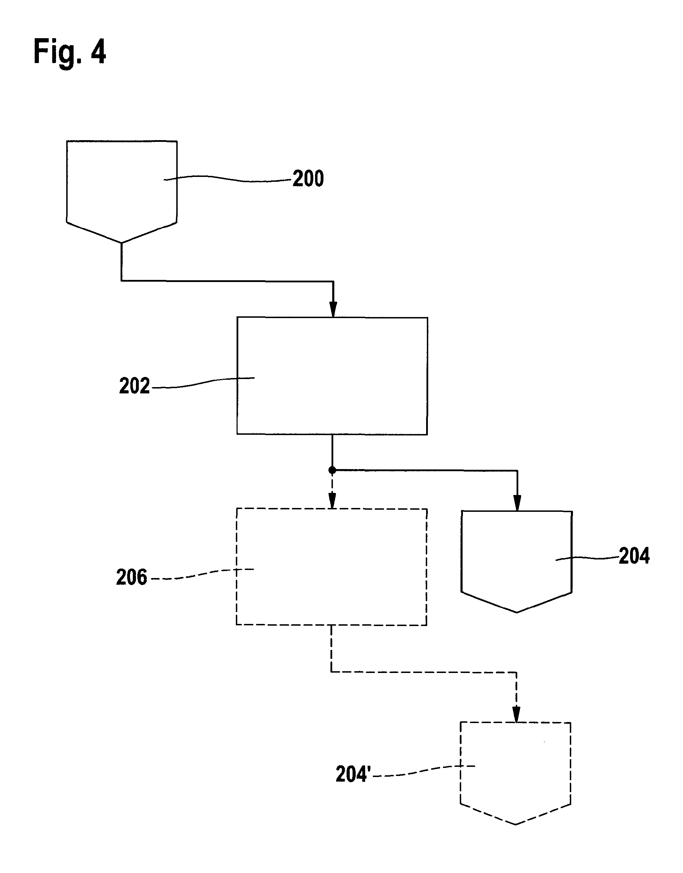

Fig. 4 zeigt dazu einen schematischen Ablauf eines Herstellverfahrens für einen erfindungsgemäßen Koppelbolzen 150. Einem Herstellprozess 202 wird dabei ein Rohmaterial 200, beispielsweise ein Metallpulver, eine Metallschmelze oder ein Rohling 200 zugeführt. Der Herstellprozess 202 ist dabei als ein Guss-, Spritz-, Spritzguss-, Pulverspritzguss- oder Sinterprozess, insbesondere ein sogenannter MIM-Prozess ausgeführt. Alternativ kann der Herstellprozess 202 in einer Variante auch ein Umformprozess sein.

In einer bevorzugten Ausführung des Herstellverfahrens ist der Herstellprozess 202 der einzige Prozessschritt. In diesem Fall kann dem Herstellprozess 202 direkt der erfindungsgemäße Koppelbolzen 150 als Prozessergebnis 204 entnommen werden.

In einer alternativen Ausführung des Herstellverfahrens ist dem Herstellprozess 202 mindestens ein Nachbearbeitungsprozess 206 nachgelagert. Der Nachbearbeitungsprozess 206 nimmt dabei das Prozessergebnis 204 im Eingang auf und liefert das Prozessergebnis 204'. Dieses Prozessergebnis 204' stellt dabei den erfindungsgemäßen Koppelbolzen 150 dar.

## Patentansprüche

1. Koppelbolzen (50, 150) einer beweglichen Gelenkvorrichtung, insbesondere eines Antriebsgelenks einer Kolbeneinheit (32), mit einer Längserstreckung (57, 157) und einer im Wesentlichen quer zu dieser Längserstreckung (57, 157) verlaufenden Aufnahmebohrung (74, 174) zur Aufnahme eines Koppelgliedes (28) der Gelenkvorrichtung, **dadurch gekennzeichnet, dass** der Koppelbolzen (150) mindestens in einer Stirnseite (160, 161) eine, sich entlang der Längserstreckung (157) ausdehnende Aussparung (154,155) aufweist, welche durch einen - von der Stirnseite (160, 161) aus gesehen - konkaven Boden (178, 179) begrenzt ist.

2. Koppelbolzen nach Anspruch 1, **dadurch gekennzeichnet, dass** der konkave Boden (178, 179) einen sattelförmigen Oberflächenverlauf (184) aufweist.

3. Koppelbolzen nach Anspruch 1 oder 2, **dadurch gekennzeichnet, dass** der konkave Boden (178, 179) einen zu einer Bohrungsachse (175) der Aufnahmebohrung (174) gekrümmten Oberflächenverlauf (184, 185) aufweist.

4. Koppelbolzen nach mindestens einem der Ansprüche 1 bis 3, **dadurch gekennzeichnet, dass** der konkave Boden (178, 179) einen im Wesentlichen konstanten, insbesondere in einem inneren, sich um die Bolzenlängsachse (158) erstreckenden Innenbereich im Wesentlichen konstanten Querschnittsverlauf (192) aufweist.

5. Koppelbolzen nach mindestens einem der Ansprüche 1 bis 4, **dadurch gekennzeichnet, dass** die Aussparung (154, 155) eine sie begrenzende Mantelfläche (162, 163), insbesondere eine sie begrenzende zylindrische Mantelfläche aufweist, dass eine Kantenlinie (172, 173) zwischen der Mantelfläche (162, 163) und dem konkaven Boden (178, 179) einen lotrechten Abstand Ak zur Stirnseite des Koppelbolzens aufweist, der größer ist als ein lotrechter Abstand Ai eines inneren Bereichs des konkaven Bodens (178, 179), insbesondere den größten Abstand Amax des konkaven Bodens (178, 179) von der Stirnseite (160, 161) darstellt.

6. Koppelbolzen nach mindestens einem der Ansprüche 1 bis 5, **dadurch gekennzeichnet, dass** ein Übergangsbereich der Mantelfläche (162, 163) der Aussparung (154, 155) zum konkaven Boden (178, 179) eine Verrundung (186, 187) aufweist.

7. Koppelbolzen nach Anspruch 6, **dadurch gekennzeichnet, dass** die Verrundung (186, 187) eine Mittelpunktslinie (188, 189) aufweist, welche vorzugsweise in der Aussparung (154, 155) verläuft.

8. Koppelbolzen nach mindestens einem der vorhergehenden Ansprüche, **dadurch gekennzeichnet, dass** der Koppelbolzen (150) an jeder Stirnseite (160, 161) eine Aussparung (154, 155) aufweist.

9. Koppelbolzen nach Anspruch 8, **dadurch gekennzeichnet, dass** alle Aussparungen (154, 155) im Wesentlichen gleich ausgebildet sind.

10. Koppelbolzen nach mindestens einem der vorhergehenden Ansprüche, **dadurch gekennzeichnet, dass** der Koppelbolzen (150) aus einem Metall-Spritzguss-Material, insbesondere aus einem Metall-Pluverspritzguss-Material hergestellt wird.

11. Koppelbolzen nach mindestens einem der vorhergehenden Ansprüche, **dadurch gekennzeichnet, dass** der Koppelbolzen (150) aus einem metallischen Material, insbesondere einem Aluminium- oder Magnesium-basierten Leichtmetall oder einer entsprechenden Leichtmetalllegierung besteht.

12. Werkzeugmaschine, insbesondere handgeführte Werkzeugmaschine mit einer Antriebsvorrichtung (20), welche mindestens eine Axialantriebsvorrichtung (22) zum Antrieb eines Werkzeugs (18) umfasst, wobei die Axialantriebvorrichtung (22) eine, ein Koppelglied (28) umfassende Bewegungsübertragungseinheit (30) und eine, einen Aufnahmebereich (46) und einen Kolbenbereich (54) mit einer Längsachse (52) aufweisende Kolbeneinheit (32) aufweist, wobei das Koppelglied (28) der Bewegungsübertragungseinheit (30) im Aufnahmebereich (46) mit der Kolbeneinheit (32) über einen Koppelbolzen (150) nach mindestens einem der vorhergehenden Ansprüche verbunden ist.

13. Werkzeugmaschine nach Anspruch 12, **dadurch gekennzeichnet, dass** die Axialantriebsvorrichtung (22) ein Schlagwerk (36), insbesondere ein Luftpolsterschlagwerk (38) ist, und dass die Kolbeneinheit (32a, 32b) ein Schlagwerkskolben (34) ist.

14. Herstellverfahren für einen Koppelbolzen nach mindestens einem der Ansprüche 1 bis 11, **dadurch gekennzeichnet, dass** der Koppelbolzen im Wesentlichen in einem spanlosen Fertigungsprozess hergestellt wird.

15. Herstellverfahren nach Anspruch 14, **dadurch gekennzeichnet, dass** der spanlosen Fertigungsprozess zur Herstellung des Koppelbolzens ein Guss-, Spritz- Spritzguss-, Pulverspritzguss- oder Sinterprozess ist.

16. Herstellverfahren nach Anspruch 15, **dadurch gekennzeichnet, dass** der spanlosen Fertigungsprozess zur Herstellung des Koppelbolzens ein Umformprozess ist.

## Claims

1. Coupling pin (50, 150) of a movable articulation device, in particular a drive joint of a piston unit (32), having a longitudinal extent (57, 157) and a receiving hole (74, 174) which runs substantially transversely with respect to the said longitudinal extent (57, 157) for receiving a coupling member (28) of the articulation device, **characterized in that**, at least in an end side (160, 161), the coupling pin (150) has a cut-out (154, 155) which expands along the longitudinal extent (157) and is delimited by a bottom (178, 179) which is concave as viewed from the end side (160, 161).

2. Coupling pin according to Claim 1, **characterized in that** the concave bottom (178, 179) has a saddle-shaped surface profile (184).

3. Coupling pin according to Claim 1 or 2, **characterized in that** the concave bottom (178, 179) has a surface profile (184, 185) which is curved with respect to a hole axis (175) of the receiving hole (174).

4. Coupling pin according to at least one of Claims 1 to 3, **characterized in that** the concave bottom (178, 179) has a cross-sectional profile (192) which is substantially constant, in particular is substantially constant in an inner interior region which extends around the pin longitudinal axis (158).

5. Coupling pin according to at least one of Claims 1 to 4, **characterized in that** the cut-out (154, 155) has a circumferential face (162, 163) which delimits it, in particular a cylindrical circumferential face which delimits it, **in that** an edge line (172, 173) between the circumferential face (162, 163) and the concave bottom (178, 179) is at a perpendicular spacing Ak from the end side of the coupling pin, which spacing Ak is greater than a perpendicular spacing Ai of an inner region of the concave bottom (178, 179), in particular represents the greatest spacing Amax of the concave bottom (178, 179) from the end side (160, 161).

6. Coupling pin according to at least one of Claims 1 to 5, **characterized in that** a transition region of the circumferential face (162, 163) of the cut-out (154, 155) to the concave bottom (178, 179) has a rounded portion (186, 187).

7. Coupling pin according to Claim 6, **characterized in that** the rounded portion (186, 187) has a centre point line (188, 189) which preferably runs in the cut-out (154, 155).

8. Coupling pin according to at least one of the preceding claims, **characterized in that** the coupling pin (150) has a cut-out (154, 155) on each end side (160, 161).

9. Coupling pin according to Claim 8, **characterized in that** all the cut-outs (154, 155) are of substantially identical configuration.

10. Coupling pin according to at least one of the preceding claims, **characterized in that** the coupling pin (150) is produced from an injection-moulded metal material, in particular from a powder injection-moulded metal material.

11. Coupling pin according to at least one of the preceding claims, **characterized in that** the coupling pin (150) is composed of a metallic material, in particular an aluminium-based or magnesium-based lightweight material or a corresponding lightweight metal alloy.

12. Machine tool, in particular handheld machine tool having a drive device (20) which comprises at least one axial drive device (22) for driving a tool (18), the axial drive device (22) having a movement transmission unit (30), which comprises a coupling member (28), and a piston unit (32) which has a receiving region (46) and a piston region (54) with a longitudinal axis (52), the coupling member (28) of the movement transmission unit (30) being connected to the piston unit (32) in the receiving region (46) via a coupling pin (150) according to at least one of the preceding claims.

13. Machine tool according to Claim 12, **characterized in that** the axial drive device (22) is a percussion mechanism (36), in particular an air-cushion percussion mechanism (38), and **in that** the piston unit (32a, 32b) is a percussion-mechanism piston (34).

14. Manufacturing method for a coupling pin according to at least one of Claims 1 to 11, **characterized in that** the coupling pin is manufactured substantially in a chipless production process.

15. Manufacturing method according to Claim 14, **characterized in that** the chipless production process for manufacturing the coupling pin is a casting, extruding, injection-moulding, powder injection-moulding or sintering process.

16. Manufacturing method according to Claim 15, **characterized in that** the chipless production process for manufacturing the coupling pin is a forming process.

## Revendications

1. Boulon de couplage (50, 150) d'un dispositif d'articulation mobile, en particulier d'une articulation d'entraînement d'une unité de piston (32), comprenant une étendue longitudinale (57, 157) et un alésage de réception (74, 174) s'étendant essentiellement transversalement à cette étendue longitudinale (57, 157) pour recevoir un organe de couplage (28) du dispositif d'articulation, **caractérisé en ce que** le boulon de couplage (150) présente au moins dans un côté frontal (160, 161) un évidement (154, 155) s'étendant le long de l'étendue longitudinale (157), qui est limité par un fond (178, 179) concave vu depuis le côté frontal (160, 161).

2. Boulon de couplage selon la revendication 1, **caractérisé en ce que** le fond concave (178, 179) présente un contour de surface en forme de selle (184).

3. Boulon de couplage selon la revendication 1 ou 2, **caractérisé en ce que** le fond concave (178, 179) présente un contour de surface (184, 185) courbé par rapport à un axe d'alésage (175) de l'alésage de réception (174).

4. Boulon de couplage selon au moins l'une quelconque des revendications 1 à 3, **caractérisé en ce que** le fond concave (178, 179) présente un contour (192) en section transversale essentiellement constant, en particulier dans une région interne s'étendant autour de l'axe longitudinal du boulon (158).

5. Boulon de couplage selon au moins l'une quelconque des revendications 1 à 4, **caractérisé en ce que** l'évidement (154, 155) présente une surface d'enveloppe (162, 163) le limitant, en particulier une surface d'enveloppe cylindrique le limitant, **en ce qu'**une ligne d'arête (172, 173) entre la surface d'enveloppe (162, 163) et le fond concave (178, 179) présente une distance verticale Ak par rapport au côté frontal du boulon de couplage qui est supérieure à une distance verticale Ai d'une région interne du fond concave (178, 179), en particulier qui constitue la plus grande distance Amax du fond concave (178, 179) depuis le côté frontal (160, 161).

6. Boulon de couplage selon au moins l'une quelconque des revendications 1 à 5, **caractérisé en ce qu**'une région de transition de la surface d'enveloppe (162, 163) de l'évidement (154, 155) présente un arrondi (186, 187) par rapport au fond concave (178, 179).

7. Boulon de couplage selon la revendication 6, **caractérisé en ce que** l'arrondi (186, 187) présente un axe central (188, 189) qui s'étend de préférence dans l'évidement (154, 155).

8. Boulon de couplage selon au moins l'une quelconque des revendications précédentes, **caractérisé en ce que** le boulon de couplage (150) présente au niveau de chaque côté frontal (160, 161) un évidement (154, 155).

9. Boulon de couplage selon la revendication 8, **caractérisé en ce que** tous les évidements (154, 155) sont réalisés de manière essentiellement identique.

10. Boulon de couplage selon au moins l'une quelconque des revendications précédentes, **caractérisé en ce que** le boulon de couplage (150) est fabriqué en un matériau moulé par injection de métal, en particulier en un matériau moulé par injection de poudre métallique.

11. Boulon de couplage selon au moins l'une quelconque des revendications précédentes, **caractérisé en ce que** le boulon de couplage (150) se compose d'un matériau métallique, en particulier d'un métal léger à base d'aluminium ou de magnésium, ou d'un alliage de métaux légers correspondant.

12. Machine-outil, en particulier machine-outil manuelle avec un dispositif d'entraînement (20) qui comprend au moins un dispositif d'entraînement axial (22) pour l'entraînement d'un outil (18), le dispositif d'entraînement axial (22) présentant une unité de transfert de mouvement (30) comprenant un organe de couplage (28) et une unité de piston (32) présentant une région de réception (46) et une région de piston (54) avec un axe longitudinal (52), l'organe de couplage (28) de l'unité de transfert de mouvement (30) étant connecté dans la région de réception (46) à l'unité de piston (32) par le biais d'un boulon de couplage (150) selon au moins l'une quelconque des revendications précédentes.

13. Machine-outil selon la revendication 12, **caractérisée en ce que** le dispositif d'entraînement axial (22) est un outil percuteur (36), en particulier un outil percuteur à coussin d'air (38), et **en ce que** l'unité de piston (32a, 32b) est un piston d'outil percuteur (34).

14. Procédé de fabrication pour un boulon de couplage selon au moins l'une quelconque des revendications 1 à 11, **caractérisé en ce que** le boulon de couplage est fabriqué essentiellement dans un procédé de fabrication sans enlèvement de copeaux.

15. Procédé de fabrication selon la revendication 14, **caractérisé en ce que** le procédé de fabrication sans enlèvement de copeaux pour la fabrication du boulon de couplage est un procédé de coulage, d'injection, de moulage par injection, de moulage par injection de poudre, ou de frittage.

16. Procédé de fabrication selon la revendication 15, **caractérisé en ce que** le procédé de fabrication sans enlèvement de copeaux pour la fabrication du boulon de couplage est un procédé de façonnage.
